Europäisches Patentamt

European Patent Office

Office européen des brevets

(19)

(11) Veröffentlichungsnummer: **0 340 432**
**A2**

(12) **EUROPÄISCHE PATENTANMELDUNG**

(21) Anmeldenummer: **89104776.3**

(22) Anmeldetag: **17.03.89**

(51) Int. Cl.4: **G02B 7/02**

(30) Priorität: **05.05.88 DE 3815372**

(43) Veröffentlichungstag der Anmeldung:
**08.11.89 Patentblatt 89/45**

(84) Benannte Vertragsstaaten:
**CH DE FR GB IT LI NL SE**

(71) Anmelder: **Optische Werke G. Rodenstock**
**Isartalstrasse 43**
**D-8000 München 5(DE)**

(72) Erfinder: **Hanke, Peter**
**Hoflacherstrasse 64**
**D-8031 Eichenau(DE)**
Erfinder: **Grimminger, Rolf-Dietrich**
**Am Fohlengarten 5a**
**D-8042 Oberschleissheim(DE)**

(54) **Fassung für optische Linsen.**

(57) Die Erfindung betrifft eine Fassung für optische Linsen mit einem im Fassungskörper (1) angeordneten, die Linse (7) in der Fassung haltenden Haltering (5). Um einen gleichmäßigen Andruck der Linse (7) zu erzielen und beim Befestigen des Halteringes (5) im Fassungskörper (1) kein Drehmoment auszuüben, wird vorgeschlagen, am äußeren Umfangsbereich des Halteringes (5) dessen Umfangsfläche (8) durchdringende Öffnungen (9) vorzusehen. In den Öffnungen (9) sind zur Linse (7) achsparallele Gewindestifte (3) drehbar und auf die Linse (7) zu gehalten angeordnet. Die Gewindestifte (3) greifen mit ihrem aus der Umfangsfläche (8) des Halteringes (5) herausragenden Gewindebereich (4) in den Fassungskörper (1) ein.

FIG.2

EP 0 340 432 A2

## Fassung für optische Linsen

Die Erfindung betrifft eine Fassung für optische Linsen mit einem im Fassungskörper angeordneten, die Linse in der Fassung haltenden Haltering.

Eine derartige Fassung ist durch die DE-OS 35 21 640 bekannt. Bei dieser Fassung ist eine Linse in Axialrichtung zwischen einer axialen Auflage und einem Haltering gehalten. Der Haltering ist hierbei als Vorschraubring, der in ein Gewinde im Fassungskörper eingreift, ausgebildet.

Durch Festschrauben des Halteringes wird auf die Linse ein Drehmoment ausgeübt. Dies hat häufig unerwünschte Dezentrierungseffekte der Linse zur Folge. Außerdem ist bei Verwendung eines starren Vorschraubringes ein gleichmäßiger Andruck der Linse gegen die axiale Auflage wegen unvermeidlicher Gewindetoleranzen nicht sichergestellt.

Der Erfindung liegt daher die Aufgabe zugrunde, eine Fassung der eingangs geschilderten Art anzugeben, bei der ein gleichmäßiger Andruck der Linse erzielt und beim Befestigen des Halteringes im Fassungskörper kein Drehmoment ausgeübt wird.

Diese Aufgabe wird erfindungsgemäß dadurch gelöst, daß am äußeren Umfangsbereich des Halteringes dessen Umfangsfläche durchdringende Öffnungen vorgesehen sind, in denen zur Linse achsparallele Gewindestifte drehbar und auf die Linse zu gehalten angeordnet sind, die mit ihren aus der Umfangsfläche des Halteringes herausragenden Gewindebereichen in den Fassungskörper eingreifen.

Zur Halterung einer Linse oder dergleichen dient ein Haltering mit mehreren, in der Regel wenigstens drei sacklochartigen Öffnungen. Die Öffnungen befinden sich in der der Linse abgewandten Stirnfläche des Halteringes an voneinander beabstandeten Stellen. Die Öffnungen durchdringen die Umfangsfläche des Halteringes derart, daß sich in der Umfangsfläche spaltartige Fenster befinden. In jeder Öffnung ist ein Gewindestift achsparallel zur Linse einsetzbar. Mit seinem aus der Umfangsfläche des Halteringes herausragenden Gewindebereich greift der Gewindestift in den Fassungskörper ein. Dabei ist der Gewindestift gehalten, d.h. er liegt wenigstens an Teilbereichen der Wand und am Boden der Öffnung an. Der Gewindestift greift in den Haltering nicht ein und ist daher in diesem drehbar.

Erfindungsgemäß besitzt der Haltering kein Gewinde in seiner dem Fassungskörper zugewandten Umfangsfläche. Zur Fixierung der Linse wird daher der Haltering in den Fassungskörper und auf die Linse gelegt. Anschließend werden die Gewindestifte in die Öffnungen durch Schrauben eingeführt.

Dabei hat sich besonders bewährt, den Haltering nach dem Einlegen mit einer definierten axialen Kraft gegen die Linse zu pressen. Unter Aufrechterhaltung dieser Vorspannkraft werden die Gewindestifte auf Anschlag eingeschraubt.

Bei der Fixierung einer Linse oder dergleichen in eine Fassung der vorgeschlagenen Art werden somit seitlich wirkende Schubkräfte vermieden und ein azimutalgleichmäßiger Andruck erzielt. Der Querschnitt einer Öffnung kann verschiedene Formen besitzen. Es muß lediglich gewährleistet sein, daß ein Gewindestift in der jeweiligen Öffnung so geführt wird, daß ein Eingriff des Gewindestiftes in den Fassungskörper gesichert ist. Besonders einfach ist eine Öffnung jedoch durch Bohren herzustellen, so daß die Öffnung einen kreisförmigen Querschnitt besitzt.

Der Winkelabstand zwischen den Öffnungen kann konstant sein. Je nach Linsendurchmesser ist eine unterschiedliche Zahl an Öffnungen vorzusehen. Beispielsweise können bei einem Linsendurchmesser bis zu 18 mm drei Öffnungen und Gewindestifte mit einem Winkelabstand von 120°, bei einem Linsendurchmesser zwischen 120 und 150 mm neun Öffnungen und Gewindestifte mit einem Winkelabstand von 40° und bei einem Linsendurchmesser zwischen 225 und 250 mm zwanzig Öffnungen und Gewindestifte mit einem Winkelabstand von 18° vorgesehen werden.

In einer bevorzugten Ausgestaltung der Erfindung weist der Fassungskörper in seinem dem Haltering benachbarten Bereich eine dem Gewinde der Gewindestifte zugeordnete umlaufende Profilierung auf. Die Profilierung kann beispielsweise ein Gewinde oder eine in Umfangsrichtung der Fassung verlaufende Verzahnung sein. Profil des Gewindestiftes und die Profilierung im Fassungskörper sind einander zugeordnet.

In einer anderen Variante der Erfindung hat es sich als vorteilhaft erwiesen, wenn die Gewindestifte Bezug auf den Werkstoff des Fassungskörpers selbstschneidend sind.

Im folgenden wird anhand zweier schematischer Zeichnungen ein Ausführungsbeispiel erläutert.

Es zeigen:

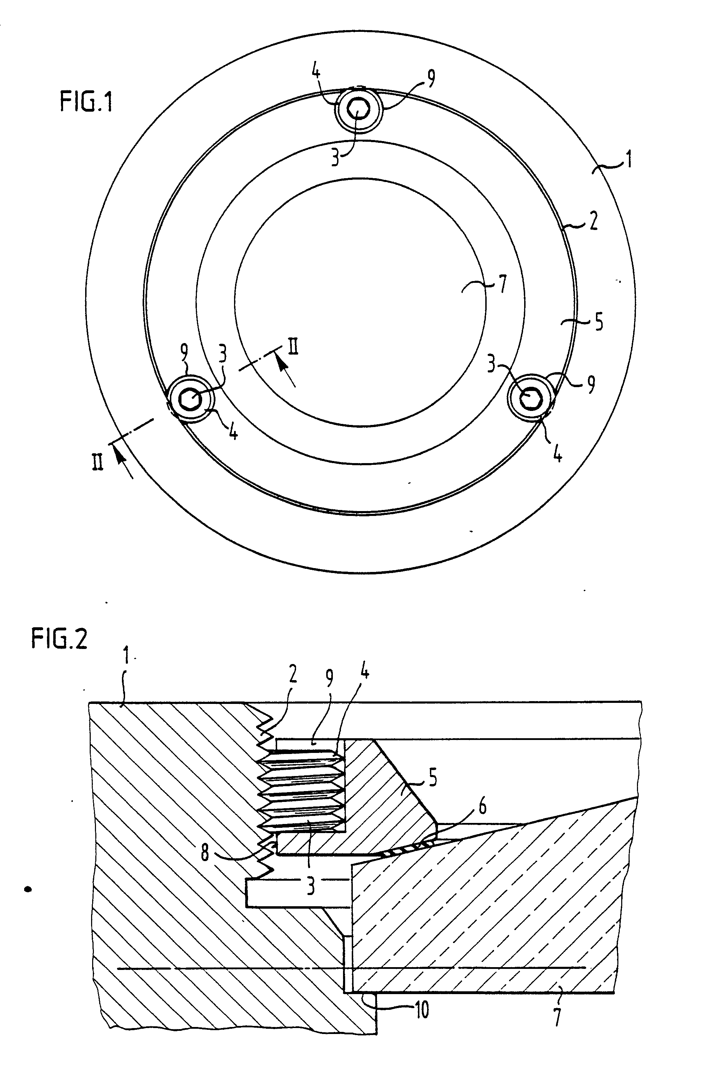

Fig. 1 eine Aufsicht auf eine Fassung mit drei Öffnungen im Haltering,

Fig. 2 einen Schnitt längs der Linie II II durch einen Teilbereich der in Fig.1 dargestellten Fassung.

In den Zeichnungen sind übereinstimmende Bauteile mit gleichen Bezugszeichen versehen. Eine Linse 5 liegt auf einer axialen Auflage 10

2

eines Fassungkörpers 1 auf. Die Linse 7 wird zwischen der Auflage 10 und einem Haltering 5, der den Randbereich der Linse 7 an deren der Auflage 10 gegenüberliegenden Seite übergreift, gehalten. Der Haltering 5 ist nicht als Vorschraubring ausgebildet, sondern besitzt eine im wesentlichen glatte Umfangsfläche 8, die im Ausführungsbeispiel Zylinderform besitzt. Am äußeren Umfangsbereich des Halteringes 5 sind drei Öffnungen (9) vorgesehen, die einen Winkelabstand von 120° haben. Die Öffnungen 9 befinden sich am äußeren Umfangsbereich des Halteringes 5 und durchdringen die zylindrische Umfangsfläche 8 derart, daß sich in der Umfangsfläche spalt artige Fenster befinden. In jeder Öffnung 9 befindet sich ein Gewindestift 3 mit Gewinde 4. Öffnung 9 besitzt eine kreisförmige Querschnittsfläche und ist so dimensioniert, daß der Gewindestift 9 mit seinem Gewinde 4 einerseits an der Wand der Öffnung 9 anliegt und andererseits mit seinem durch das Fenster in der Umfangsfläche aus dieser herausragenden Gewindebereich in den Fassungskörper 1 eingreift. Im Ausführungsbeispiel weist der Fassungskörper 1 in seinem dem Haltering 5 benachbarten Bereich ein dem Gewinde 4 des Gewindestiftes 3 zugeordnetes umlaufendes Gewinde 2 auf. Im Bereich der Gewindestifte sind zwischen dem Haltering 5 und der Linse 7 elastische Rippen 6 beispielsweise Rippen aus Silikon, angeordnet.

Zur Fixierung der Linse 7 wird der Haltering 5 in den Fassungskörper 1 eingelegt. Der Haltering wird mit einer definierten axialen Kraft gegen die Linse 7 gepresst. Unter Aufrechterhaltung dieser Vorspannkraft werden die sechs Gewindestifte 9 auf Anschlag in die Öffnungen 9 eingeschraubt.

## Ansprüche

1. Fassung für optische Linsen mit einem im Fassungskörper angeordneten, die Linse in der Fassung haltenden Haltering, dadurch gekennzeichnet, daß am äußeren Umfangsbereich des Halteringes (5) dessen Umfangsfläche (8) durchdringende Öffnungen (9) vorgesehen sind, in denen zur Linse (7) achsparallele Gewindestifte (3) drehbar und auf die Linse (7) zu gehalter angeordnet sind, die mit inner aus der Umfangsfläche (8) des Halteringes (5) herausragenden Gewindebereichen (4) in den Fassungskörper (1) eingreifen.

2. Fassung nach Anspruch 1, dadurch gekennzeichnet, daß der Fassungskörper (1) in seinem dem Haltering (5) benachbarten Bereich eine dem Gewinde (4) der Gewindestifte (3) zugeordnete, umlaufende Profilierung (2) aufweist.·

3. Fassung nach Anspruch 1, dadurch gekennzeichnet, daß die Gewindestifte (3) in Bezug auf den Werkstoff des Fassungskörper (1) selbstschneidend sind.

4. Fassung nach einem der Ansprüche 1-3, dadurch gekennzeichnet, daß die Umfangsfläche (8) des Halteringes (5) zylindrisch ist.

FIG.1

FIG.2